# EUROPÄISCHE PATENTSCHRIFT

(11) **EP 2 215 387 B1**
(45) Veröffentlichungstag und Bekanntmachung des Hinweises auf die Patenterteilung: **24.04.2013**
(21) Anmeldenummer: 08855876.2
(22) Anmeldetag: 05.12.2008
(51) Int. Cl.: F16K 3/18

(54) **VAKUUMVENTIL**
VACUUM VALVE
SOUPAPE DE DÉPRESSION

(30) Priorität: 06.12.2007 DE 102007059039
(43) Veröffentlichungstag der Anmeldung: 11.08.2010
(73) Patentinhaber: VAT Holding AG, 9469 Haag (CH)
(72) Erfinder: DUELLI, Bernhard, A-6834 Übersaxen (AT)
(74) Vertreter: Hofmann, Ralf U.
(86) Internationale Anmeldenummer: PCT/AT2008/000435
(87) Internationale Veröffentlichungsnummer: WO 2009/070824

(56) Entgegenhaltungen:
- WO-A-2005/064236
- DE-A1-102005 037 410
- GB-A- 2 177 743
- US-A1- 2004 129 910

## Beschreibung

Die Erfindung bezieht sich auf ein Vakuumventil umfassend eine Wand mit einer Ventilöffnung und einem die Ventilöffnung umgebenden Ventilsitz, der eine in einer Ebene liegende Dichtfläche oder einen in einer Ebene liegenden Dichtring aufweist, und eine Ventilplatte, die über einen Schließweg von einer Offenstellung, in der sie die Ventilöffnung freigibt, in eine Schließstellung verstellbar ist, in der sie die Ventilöffnung verschließt und die einen Dichtring, der in der Schließstellung an die Dichtfläche des Ventilsitzes angedrückt ist, oder eine Dichtfläche aufweist, an die in der Schließstellung der Dichtring des Ventilsitzes angedrückt ist, wobei die Ventilplatte beim Schließen des Vakuumventils ausgehend von der Offenstellung der Ventilplatte über einen Hauptabschnitt des Schließweges in eine Hauptschließrichtung verstellt wird, die parallel zur Ventilplatte und parallel zur Ebene der Dichtfläche bzw. des Dichtrings des Ventilsitzes ist, und im Anschluss an den Hauptabschnitt des Schließweges zur Heranführung der Ventilplatte an den Ventilsitz über einen winkelig zur Ventilplatte und winkelig zur Ebene der Dichtfläche bzw. des Dichtrings des Ventilsitzes verlaufenden Endabschnitt des Schließweges verstellt wird.

Vakuumventile nach Art von Plattenventilen, bei denen die Ventilöffnung durch eine Ventilplatte verschlossen wird, die gegen den die Ventilöffnung umgebenden Ventilsitz angedrückt wird, sind in vielen unterschiedlichen Ausführungsformen bekannt geworden. Um hierbei die aus einem elastischen Material bestehende Dichtung nicht einer zu starken Scherbeanspruchung auszusetzen, ist es bekannt, die Schließbewegung der Ventilplatte zweistufig durchzuführen. In einem ersten Abschnitt des Schließweges, der den Großteil der Erstreckung des Schließweges umfasst, wird die Ventilplatte von einer die Ventilöffnung freigebenden Offenstellung in eine die Ventilöffnung überdeckende, vom Ventilsitz aber noch abgehobene Zwischenstellung verfahren. Im Endabschnitt des Schließweges wird die Ventilplatte von der Zwischenstellung in die Schließstellung verfahren, in der sie an den Ventilsitz angedrückt ist und die Ventilöffnung abdichtet.

Bei einer herkömmlichen Art von Schieberventilen wird dieser zweistufige Bewegungsvorgang der Ventilplatte durch mechanische Elemente bewirkt, die zwischen einer vom mindestens einen Aktuator bewegten Tragplatte und der Ventilplatte angeordnet sind. Es kann sich bei diesen mechanischen Elementen um Rollkörper, die in keilförmigen Spalten zwischen der Ventilplatte und der Tragplatte geführt sind, Hebelmechanismen oder Kippelementen zwischen diesen beiden Platten handeln. Um eine Verbiegung der Ventilstange beim zweiten Bewegungsschritt zu vermeiden bzw. zu begrenzen, stützt sich die Tragplatte oder eine ebenfalls über zum Aufspreizen dienende mechanische Elemente mit der Tragplatte verbundene Stützplatte gegen eine dem Ventilsitz gegenüberliegende Wand des Ventilgehäuses ab. Derartige Schieberventile sind beispielsweise aus der US 4,560,141 A, der DE 3 209 217 C2, der DE 3224387 C2 und der US 3,185,435 A bekannt.

Weiters kann der zweite Abschnitt der Schließbewegung durch eine Verschwenkung der Ventilstange um eine rechtwinkelig zur Ventilstange liegende Achse erreicht werden. Diese Verschwenkung der Ventilstange kann beispielsweise über eine Kulissenführung erreicht werden, vergleiche z.B. US 7,066,443 82, oder über eigene Aktuatoren, vergleiche z.B. US 7,059,583 B2, US 6,390,448 B1 oder DE 19 633 798 A1.

Weiters ist es bekannt, den zweiten Abschnitt der Schließbewegung dadurch auszuführen, dass die Ventilplatte mittels mindestens eines Aktuators gegenüber einer Tragplatte verstellbar ist, welche ihrerseits mittels mindestens eines Aktuators über den ersten Abschnitt des Schließweges verstellbar ist. Derartige Vakuumventile sind beispielsweise aus der US 6,056,266 und der US 6,899,316 B2 bekannt.

Aus der US 6,776,394 B2 ist weiters ein sogenanntes Pendelventil bekannt, bei der die Ventilplatte im ersten Schritt nicht linear verschoben wird sondern entlang eines Kreisbogens verschwenkt wird. Um eine ausreichende Anpresskraft der Ventilplatte an den Ventilsitz zu erreichen sind hier im Ventilgehäuse verstellbare Stößel vorgesehen, mit denen die Ventilplatte an den Ventilsitz angedrückt werden kann. Aus der US 2007/0 228 314 A1 geht ein Pendelventil hervor, bei dem die verstellbaren Stößel in der Ventilplatte gelagert sind und sich am Gehäuse abstützen.

Bei einem anderen Typ von Plattenventilen bzw. Schieberventilen werden die Dichtfläche und der Dichtring in dreidimensionaler Weise derart ausgebildet, dass beim geradlinigen Einfahren der Ventilplatte in den Ventilsitz keine Scherbelastungen auf die elastomere Dichtung wirken. Die Ventilplatte wird über ihrem gesamten Schließweg von ihrer Offenstellung bis in ihre Schließstellung geradlinig verschoben. Ein derartiges Ventil ist beispielsweise aus der US 4,921,213 bekannt.

Es ist weiters bekannt geworden, zwei unabhängig voneinander betätigbare Verschlussglieder in einem gemeinsamen Ventilgehäuse anzuordnen, wobei vom ersten Verschlussglied eine erste Ventilöffnung und vom zweiten Verschlussglied eine zweite Ventilöffnung abdichtbar ist.

Plattenventile, bei denen im ersten Abschnitt der Schließbewegung die Ventilplatte parallel zur Ebene des Ventilsitzes linear verschoben wird und im Endabschnitt der Schließbewegung im Wesentlichen rechtwinkelig hierzu zum Ventilsitz verschoben wird und an diesen angedrückt wird, werden auch als L-Ventile bezeichnet. Wenn im Endabschnitt der Schließbewegung die Bewegung schräg zur Bewegungsrichtung des ersten Schrittes und zur Ebene des Ventilsitzes erfolgt, so wird auch die Bezeichnung J-Ventil verwendet.

Aus der GB 2 177 743 A geht ein Schieberventil hervor, bei welchem die Ventilplatte im letzten Abschnitt der Schließbewegung mittels schräg stehender Führungsflächen an den Ventilsitz angedrückt wird. Es wird dadurch beim Schließen des Vakuumventils ausgehend von der Offenstellung der Ventilplatte die Ventilplatte zunächst über einen Hauptabschnitt des Schließweges in eine Hauptschließrichtung verstellt, die parallel zur Ventilplatte ist, und im Anschluss an den Hauptabschnitt des Schließweges über einen winkelig zur Ventilplatte verlaufenden Endabschnitt des Schließweges verstellt. An einstückig mit der Wand, die die Ventilöffnung aufweist, ausgebildeten Teilen sind die Ventilplatte über den Endabschnitt des Schließweges führende Führungselemente angeordnet, die mit an der Ventilplatte angeordneten Führungselementen zusammenwirken, wobei diese zusammenwirkenden Führungselemente die schräg stehenden Führungsflächen aufweisen. Es handelt sich bei diesem Ventil nicht um ein Vakuumventil.

Aus der WO 2005/064236 A1 geht ebenfalls ein Andrücken einer Ventilplatte an einen Ventilsitz mit Hilfe von Schrägflächenführungen hervor. Dieses Ventil ist insbesondere für eine Hochtemperaturprozess-Kammer vorgesehen.

Aufgabe der Erfindung ist es ein Vakuumventil der eingangs genannten Art bereitzustellen, welches eine einfache Ausbildung aufweist, wobei sich ein in erfindungsgemäßer Weise ausgebildetes Vakuumventil insbesondere für langgestreckte bzw. schlitzförmige Ventilöffnungen eignet. Erfindungsgemäß gelingt dies durch ein Vakuumventil mit den Merkmalen des Anspruchs 1.

Durch die Anordnung des mindestens einen Führungselementes, welches die Ventilplatte über den Endabschnitt des Schließweges führt, an der die Ventilöffnung aufweisenden Wand, kann eine einfache platzsparende Konstruktion erreicht werden. Hierbei kann eine für das Andrücken der Ventilplatte an den Ventilsitz auszuübende Andrückkraft direkt von der die Ventilöffnung aufweisenden Wand aufgenommen werden, was insbesondere bei langgestreckten bzw. schlitzförmigen Ventilöffnungen vorteilhaft ist (da Toleranzen oder Flexibilitäten anderer Teile des Vakuumventils nicht ein über die Länge der Ventilöffnung gleichmäßiges Andrücken der Ventilplatte an den Ventilsitz beeinflussen).

In einer vorteilhaften Ausführungsform der Erfindung sind vor und hinter (bezogen auf die Hauptschließrichtung) der Ventilöffnung Führungselemente zum Führen der Schließbewegung der Ventilplatte über den Endabschnitt ihres Schließweges an der Wand angeordnet, die mit Führungselementen der Ventilplatte zusammenwirken. Mindestens eines der beiden jeweils zusammenwirkenden Führungselemente weist hierbei eine winkelig zur Ventilplatte und winkelig zur Ebene der Dichtfläche bzw. des Dichtrings des Ventilsitzes stehende Führungsfläche auf (diese Führungsfläche liegt also nicht parallel zur Ebene der Dichtfläche bzw. des Dichtrings des Ventilsitzes). Diese Führungsflächen, die auch als Schrägflächen bezeichnet werden können, weisen hierbei bevorzugterweise einen konstanten Neigungswinkel auf, wobei aber auch ein sich ändernder Neigungswinkel denkbar und möglich ist. Anstelle der Anordnung des mindestens einen hinter der Ventilöffnung (bezogen auf die Hauptschließrichtung) angeordneten Führungselements an der Wand könnte das mindestens eine angeordnete Führungselement auch an einer Seitenwand des Vakuumventils angeordnet sein, die von der die Ventilöffnung aufweisenden Wand absteht.

In der ersten Alternative der erfindungsgemäßen Ausbildung ist vorgesehen, dass ein vor (bezogen auf die Hauptschließrichtung) der Ventilöffnung sich befindender Vorsprung der Wand oder ein an der Wand angebrachtes und von dieser abstehendes Teil in eine Vertiefung in der Ventilplatte ragt. Hierbei bilden der Vorsprung der Wand bzw. das an der Wand angebrachte und von dieser abstehende Teil und die Vertiefung, gegebenenfalls in Verbindung mit daran angeordneten Teilen, z.B. Führungsrollen, zusammenwirkende Führungselemente zur Führung des Ventiltellers über den Endabschnitt des Schließweges. In der zweiten Alternative der erfindungsgemäßen Ausbildung ist vorgesehen, dass ein Vorsprung der Ventilplatte oder ein an der Ventilplatte angebrachtes und von dieser abstehendes Teil in eine vor (bezogen auf die Hauptschließrichtung) der Ventilöffnung liegende Vertiefung in der Wand ragt. Hierbei bilden der Vorsprung der Ventilplatte bzw. das von der Ventilplatte abstehende Teil und die Vertiefung, gegebenenfalls zusammen mit daran angeordneten Teilen, z.B. Führungsrollen, Führungselemente zur Führung der Ventilplatte über den Endabschnitt des Schließweges.

Das mindestens eine hinter der Ventilöffnung (bezogen auf die Hauptschließrichtung) stationär zur Wand angeordnete Führungselement kann von einem Vorsprung der Wand, einem an der Wand angebrachten und von dieser abstehenden Teil, einer Vertiefung in der von der Wand abstehenden Seitenwand, einem Vorsprung der Seitenwand oder einem an der Seitenwand angebrachten und von dieser abstehenden Teil gebildet werden.

Vorzugsweise ist zur Verstellung der Ventilplatte über den Schließweg mindestens ein Aktuator vorhanden, der die Ventilplatte über den gesamten Schließweg verstellt.

In einer möglichen Ausführungsform der Erfindung bildet die Ventilplatte das einzige Verschlussglied des Vakuumventils. In einer weiteren Ausführungsform der Erfindung kann zusätzlich zur Ventilplatte, die ein erstes Verschlussglied des Vakuumventils zum Verschluss der ersten Ventilöffnung in der ersten Wand bildet, ein zweites Verschlussglied vorhanden sein, welches zum Verschluss einer zweiten Ventilöffnung in einer zweiten Wand dient. Beide Verschlussglieder sind hierbei innerhalb des Innenraums eines Ventilgehäuses des Vakuumventils angeordnet, wobei die erste und die zweite Wand Teil dieses Ventilgehäuses sind und vorzugsweise den Innenraum auf gegenüberliegenden Seiten begrenzen. Die beiden Verschlussglieder sind unabhängig voneinander betätigbar.

Der Verschluss der zweiten Ventilöffnung mit dem zweiten Verschlussglied kann beispielsweise nach Art eines L-Ventils ausgebildet sein. Durch das rechtwinkelige Aufsetzen des Dichtrings auf die Dichtfläche wird die Belastung des Dichtrings möglichst gering gehalten, sodass dieses zweite Verschlussglied für eine Vielzahl von Schließ- und Öffnungsvorgängen ausgelegt ist. Auch eine Ausbildung in Form eines J-Ventils oder eine andere Ausbildung des Verschlusses der zweiten Ventilöffnung mit dem zweiten Verschlussglied ist denkbar und möglich.

Ein mit einem zusätzlichen zweiten Verschlussglied ausgestattetes erfindungsgemäßes Vakuumventil kann beispielsweise als Transferventil zur Durchführung von Substraten in einer Vakuum-Prozessanlage eingesetzt werden. Das Öffnen und Schließen des Vakuumventils im Normalbetrieb wird mit dem zweiten Verschlussglied durchgeführt. Wenn ein Service des zweiten Verschlussgliedes erforderlich wird, so kann das Vakuumventil mit dem ersten Verschlussglied geschlossen werden und in der Folge der Service am ersten Verschlussglied durchgeführt werden, ohne dass der durch Verschluss der ersten Ventilöffnung mittels des ersten Verschlussgliedes abgeschlossene Teil der Vakuumanlage geflutet werden muss.

Weitere Vorteile und Einzelheiten der Erfindung werden im Folgenden anhand der beiliegenden Zeichnung erläutert. In dieser zeigen:
- Fig. 1: ein erstes Ausführungsbeispiel eines Vakuumventils gemäß der Erfindung in der Offenstellung der Ventilplatte, in Ansicht;
- Fig. 2: eine Ansicht auf die gegenüberliegende Seite des Ventils von Figur 1, wobei die in Figur 2 vorne liegende Wand des Ventilgehäuses weggelassen ist;
- Fig. 3: einen Schnitt entlang der Linie AA von Figur 1;
- Fig. 4: einen Schnitt entlang der Linie BB von Figur 1;
- Fig. 5 u. 6: Darstellungen des Vakuumventils entsprechend den Figuren 1 und 2, aber in der Schließstellung der Ventilplatte;
- Fig. 7: einen Schnitt entlang der Linie CC von Figur 5;
- Fig. 8: einen Schnitt entlang der Linie DD von Figur 5;
- Fig. 9: einen Schnitt entsprechend Figur 8, aber in einer Zwischenstellung der Ventilplatte;
- Fig. 10 u. 11: vergrößerte Ausschnitte von Figur 9;
- Fig. 12: einen Schnitt entlang der Linie EE von Figur 5;
- Fig. 13: eine Schrägsicht des Vakuumventils gemäß dem ersten Ausführungsbeispiel, in der Offenstellung der Ventilplatte;
- Fig. 14: einen Schnitt entsprechend Figur 10 einer modifizierten Ausführungsform;
- Fig. 15: einen Schnitt entsprechend Figur 11 einer weiteren modifizierten Ausführungsform;
- Fig. 16: ein weiteres Ausführungsbeispiel eines Vakuumventils gemäß der Erfindung, in der Offenstellung beider Verschlussglieder;
- Fig. 17: einen Schnitt entlang der Linie FF von Figur 16;
- Fig. 18: einen Schnitt entsprechend Figur 17, aber in einer Zwischenstellung des zweiten Verschlussgliedes;
- Fig. 19: einen Schnitt entlang der Linie GG von Figur 16, wobei sich aber das zweite Verschlussglied in der in Figur 18 dargestellten Zwischenstellung befindet;
- Fig. 20: einen Schnitt entsprechend Figur 18, aber in der Schließstellung des zweiten Verschlussgliedes;
- Fig. 21: eine Ansicht des Vakuumventils entsprechend dieser weiteren Ausführungsform, wobei sich das erste Verschlussglied in der Schließstellung und das zweite Verschlussglied in einer Zwischenstellung befindet;
- Fig. 22: einen Schnitt entlang der Linie II von Figur 21;
- Fig. 23: einen Schnitt entlang der Linie HH von Figur 21;
- Fig. 24: eine Ansicht des Vakuumventils gemäß dieser weiteren Ausführungsform von der gegenüberliegenden Seite;
- Fig. 25: einen Schnitt entlang der Linie JJ von Figur 24;
- Fig. 26: einen Schnitt entsprechend Figur 23, aber mit abmontiertem zweiten Verschlussglied;
- Fig. 27: einen Schnitt in der gleichen Schnittebene wie Figur 25, aber in die entgegengesetzte Blickrichtung und mit abmontiertem Verschlussglied;
- Fig. 28: eine Schrägsicht des Vakuumventils gemäß diesem weiteren Ausführungsbeispiel, in der Schließstellung des zweiten Verschlussgliedes;
- Fig. 29: einen Schnitt durch einen Aktuator für das zweite Verchlussglied.

Analoge Teile sind in den verschiedenen Ausführungsbeispielen mit den gleichen Bezugszeichen versehen.

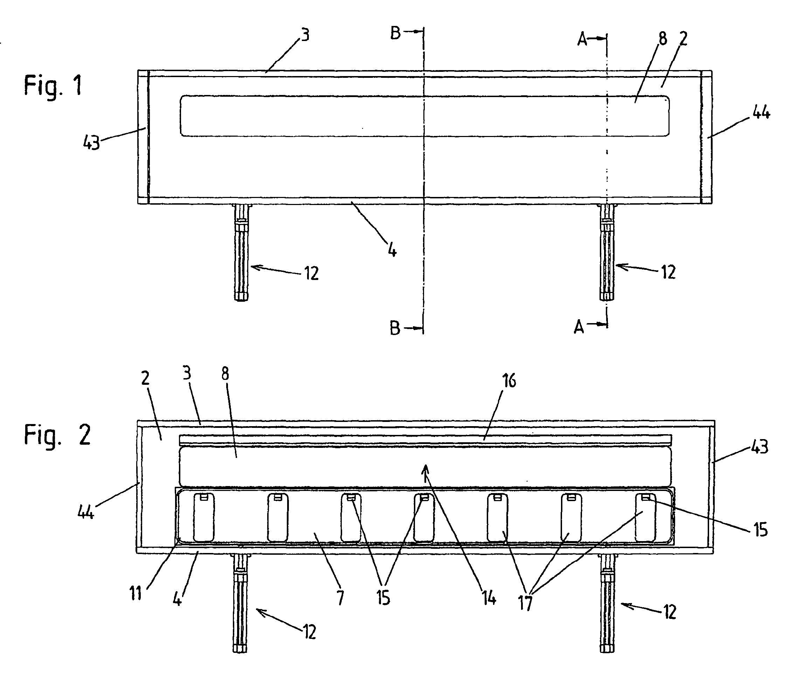

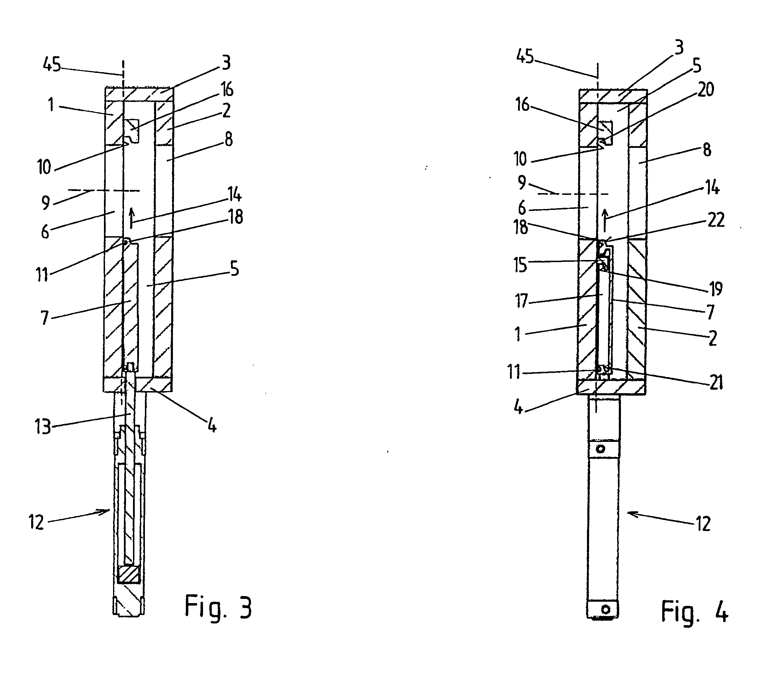

Ein erstes Ausführungsbeispiel der Erfindung wird im Folgenden anhand der Figuren 1 bis 13 erläutert. Das Vakuumventil gemäß diesem Ausführungsbeispiel weist ein Ventilgehäuse mit Wänden 1, 2 und Seitenwänden 3, 4, 43, 44 auf, die einen Innenraum 5 umschließen, der einen Vakuumbereich des Ventils darstellt, d.h. im an Ventilkammern angeschlossenen Zustand des Ventils kann im Innenraum 5 ein Vakuum aufrecht erhalten werden.

Die Wand 1 besitzt eine Ventilöffnung 6, welche von einer Ventilplatte 7 verschließbar ist. Die gegenüberliegende Wand 2 weist ebenfalls eine Öffnung 8 auf. Die Ventilöffnung 6, der Innenraum 5 und die Öffnung 8 bilden einen Durchgangskanal durch das Vakuumventil.

Das Ventilgehäuse ist in herkömmlicher Weise mittels Flanschen, die an der ersten und zweiten Wand 1, 2 ausgebildet oder angeordnet sind, mit anderen Teilen einer Vakuumanlage verbindbar. Diese Flansche sind in der schematischen Zeichnung nicht dargestellt.

Im vollständig geöffneten Zustand des Vakuumventils befindet sich die Ventilplatte 7 in ihrer Offenstellung (vgl. Figuren 1 bis 4) und gibt die Ventilöffnung 6 frei, vorzugsweise vollständig, d.h. in Richtung der Achse 9 der Ventilöffnung 6 gesehen überdeckt sie die Ventilöffnung 6 nicht.

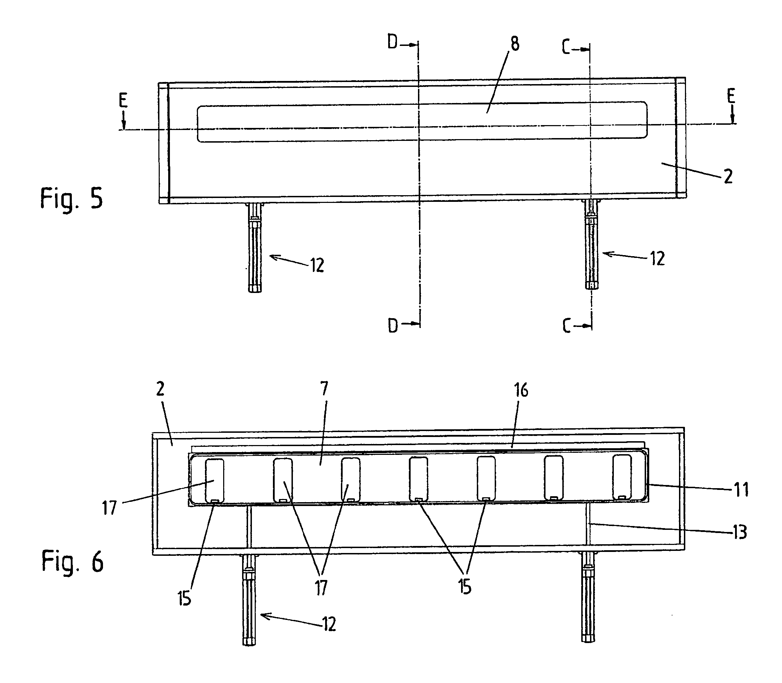

Im vollständig geschlossenen Zustand des Vakuumventils befindet sich die Ventilplatte 7 in ihrer Schließstellung (vgl. Figuren 5 bis 8), wobei sie an einen die Ventilöffnung 6 umgebenden Ventilsitz angedrückt ist. Der Ventilsitz wird im gezeigten Ausführungsbeispiel von einer Dichtfläche 10 gebildet, an den ein an der Ventilplatte 7 angeordneter elastischer Dichtring 11 angedrückt ist. In einer modifizierten Ausführungsform könnte der Dichtring auch am Ventilsitz und die Dichtfläche am Ventil angeordnet sein. Der Dichtring 11 besteht aus einem geeigneten elastomeren Material, beispielsweise Viton.

Zur Verstellung der Ventilplatte 7 über ihren Schließweg von ihrer Offenstellung in ihre Schließstellung und über den umgekehrten Öffnungsweg zurück dienen zwei Aktuatoren 12, die als Kolben-Zylinder-Einheiten ausgebildet sind. Es könnte auch nur ein Aktuator eingesetzt werden. Auch mehr als zwei Aktuatoren könnten eingesetzt werden. Die eingesetzten Aktuatoren könnten auch in anderer Form ausgebildet sein, beispielsweise als Elektromotoren mit geeigneten Getriebemitteln.

Ein jeweiliger Aktuator 12 verschiebt eine jeweilige Ventilstange 13 achsial, wobei an den Ventilstangen die Ventilplatte 7 angebracht ist. Auch mehr oder weniger als die gezeigten zwei Ventilstangen 13 könnten vorgesehen sein.

Die Aktuatoren 12 dienen jeweils zur Verstellung der Ventilplatte 7 über ihren gesamten Schließweg. Es sind also nicht separate Aktuatoren für verschiedene Abschnitte des Schließweges vorhanden.

Bei der Verstellung der Ventilplatte 7 ausgehend von ihrer Offenstellung in ihre Schließstellung wird die Ventilplatte zunächst über einen Hauptabschnitt des Schließweges, der den Großteil des Schließweges ausmacht, in eine Hauptschließrichtung 14 geradlinig verschoben. Hierbei wird die Ventilplatte 7 in ihrer Ebene verschoben, d.h. die Hauptschließrichtung 14 liegt parallel zur Ventilplatte 7. Weiters liegt die Hauptschließrichtung 14 parallel zur Ebene 45, in der die Dichtfläche 10 des Ventilsitzes angeordnet ist. Falls am Ventilsitz in der genannten modifizierten Ausführungsform einen Dichtring angeordnet ist, liegt die Hauptschließrichtung 14 parallel zur Ebene 45, in der der Dichtring des Ventilsitzes angeordnet ist.

In der Folge wird die Ventilplatte 7 über einen Endabschnitt des Schließweges winkelig (d.h. nicht parallel) zur Hauptebene der Ventilplatte und winkelig zur Ebene 45 der Dichtfläche 10 des Ventilsitzes bzw., falls ein Dichtring am Ventilsitz angeordnet ist, winkelig zur Ebene 45 des Dichtrings des Ventilsitzes verstellt, bis die Ventilplatte 7 an den Ventilsitz angelegt ist und der Dichtring 11 an die Dichtfläche 10 angedrückt ist. In dieser Schließstellung der Ventilplatte 7 ist die Ventilöffnung 6 von der Ventilplatte 7 abgedichtet. Die Verschiebung der Ventilplatte über den Endabschnitt des Schließweges erfolgt unter elastischer Verbiegung der Ventilstangen 13.

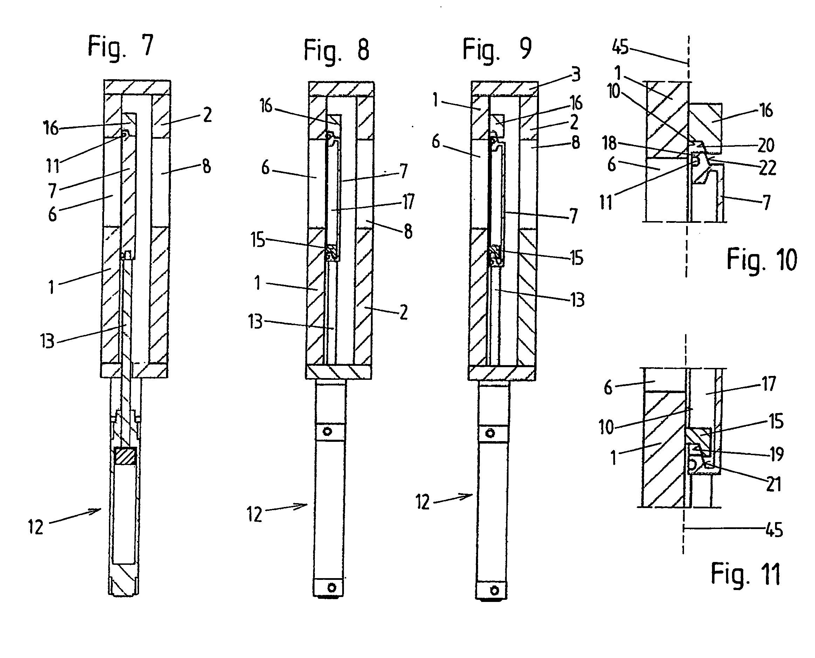

In den Figuren 9 bis 11 ist die Zwischenstellung der Ventilplatte 7 dargestellt, welche diese am Ende des Hauptabschnitts des Schließweges bzw. am Anfang des Endabschnitts des Schließweges einnimmt. Es ist ersichtlich, dass die Ventilplatte die Ventilöffnung in Richtung der Achse 9 der Ventilöffnung gesehen überdeckt, vom Ventilsitz aber noch abgehoben ist. Um die Führung der Ventilplatte 7 über den Endabschnitt des Schließweges zu bewirken, sind an der Wand 1 angeordnete Führungselemente 15, 16 vorgesehen, die mit Führungselementen 17, 18 der Ventilplatte 7 zusammenwirken. Hierbei ist bezogen auf die Hauptschließrichtung 14 vor und hinter der Ventilöffnung 6 jeweils mindestens ein zur Wand 1 stationäres Führungselement 15, 16 vorhanden, von denen zumindest das mindestens eine vor der Ventilöffnung 6 liegende Führungselement 15 an der Wand 1 angeordnet ist. Das mindestens eine hinter der Ventilöffnung 6 liegende Führungselement 16 ist im gezeigten Ausführungsbeispiel ebenfalls an der Wand 1 angeordnet. Auch eine Anordnung an der Seitenwand 3, welche von der die Ventilöffnung 6 aufweisenden Wand 1 absteht, ist denkbar und möglich, wie weiter unten noch genauer erläutert wird.

Die an der Wand 1 angeordneten Führungselemente 15 und 16 werden im gezeigten Ausführungsbeispiel von an der Wand 1 angeordneten Vorsprüngen gebildet, die als separate, an der Wand 1 angebrachte Teile ausgebildet sind. Auch eine mit der Wand 1 einstückige Ausbildung von solchen Vorsprüngen ist denkbar und möglich.

Die an der Wand 1 angeordneten Führungselemente 15 und 16 weisen Führungsflächen 19, 20 auf, die winkelig zur Ebene 45 stehen, in der die Dichtfläche 10 des Ventilsitzes liegt bzw., falls am Ventilsitz ein Dichtring angeordnet ist, in der der Dichtring des Ventilsitzes liegt.

In Richtung quer zur Hauptschließrichtung 14 sind mehrere an der Wand 1 vor der Ventilöffnung angeordnete Führungselemente 15 vorgesehen, wie dies insbesondere aus den Figuren 2, 6 und 12 ersichtlich ist (in den Figuren 2 und 6 ist zwar die vordere Wand 1 weggelassen, die an der Wand 1 angebrachten Führungselemente 15, 16 sind aber dargestellt). Ein jeweiliges Führungselement 15 ragt in eine Vertiefung, die an der der Wand 1 zugewandten Seite der Ventilplatte 7 in dieser ausgenommen ist und die einen eine Führungsfläche 21 bildenden Wandabschnitt umfasst, der einen hinterschnittenen Bereich der Vertiefung begrenzt. Die Führungsfläche 21 wirkt im Endabschnitt des Schließweges mit der Führungsfläche 19 des jeweiligen Führungselements 15 zusammen. Die Führungsfläche 21 steht winkelig zur Ebene 45, in der die Dichtfläche 10 des Ventilsitzes liegt bzw., falls ein Dichtring am Ventilsitz angeordnet ist, in der der-Dichtring des Ventilsitzes liegt. Die jeweilige, eine Führungsfläche 21 aufweisende Vertiefung bildet ein Führungselement 17 der Ventilplatte 7.

Anstelle von mehreren, quer zur Hauptschließrichtung voneinander beabstandeten Vertiefungen in der Ventilplatte 7 könnte auch eine durchgehende Vertiefung vorhanden sein, in welche die Führungselemente 15 ragen oder ein durchgehendes leistenartiges Führungselement 15 ragt. Zur Erzielung einer ausreichenden Stabilität der Ventilplatte 7 müsste diese dann mit einer entsprechenden insgesamten Dicke ausgebildet sein.

Mit dem hinter der Ventilöffnung 6 an der Wand 1 angeordneten Führungselement 16 wirkt ein Führungselement 18 der Ventilplatte 7 zusammen, welches an einem am vorderen (bezogen auf die Hauptschließrichtung 14) Rand der Ventilplatte 7 abstehenden Fortsatz gebildet wird, der an seiner von der Wand 1 abgelegenen Seite eine Führungsfläche 22 aufweist, die winkelig zur Ebene 45 steht, in der die Dichtfläche 10 des Ventilsitzes liegt bzw., falls am Ventilsitz ein Dichtring angeordnet ist, in der der Dichtring des Ventilsitzes liegt. Die Führungsfläche 22 des Führungselements 18 wirkt mit der Führungsfläche 20 des an der Wand 1 angeordneten Führungselements 16 zusammen.

Im gezeigten Ausführungsbeispiel stehen somit jeweils beide der zusammenwirkenden Führungsflächen 19, 21; 20, 22 winkelig zur genannten Ebene 45 der Dichtfläche 10 bzw. des Dichtrings des Ventilsitzes. Denkbar und möglich wäre es aber auch, dass jeweils nur eine der beiden zusammenwirkenden Führungsflächen 19, 21; 20, 22 winkelig zur Ebene 45 der Dichtfläche 10 bzw. des Dichtrings des Ventilsitzes steht.

Der Winkel einer jeweiligen winkelig zur Ebene 45 der Dichtfläche 10 bzw. des Dichtrings des Ventilsitzes stehenden Führungsfläche, den diese mit der genannten Ebene einschließt, liegt vorzugsweise im Bereich zwischen 8° und 40°, wobei ein Bereich zwischen 10° und 30° besonders bevorzugt ist.

Im gezeigten Ausführungsbeispiel sind die zusammenwirkenden Führungsflächen 19, 21; 20, 22 jeweils eben ausgebildet. Anstelle einer ebenen Ausbildung der jeweiligen winkelig zur genannten Ebene stehenden Führungsfläche könnte diese auch gekrümmt ausgebildet sein, d.h. ihr Winkel gegenüber der genannten Ebene würde sich über ihren Verlauf ändern. Hierbei könnte zusätzlich zu einem winkelig (gegebenenfalls mit sich änderndem Winkel) zur Ebene 45 stehenden Abschnitt auch eine Stelle oder ein Abschnitt vorhanden sein, in welchem die Führungsfläche parallel zur Ebene 45 liegt, insbesondere am Anfang (bezogen auf ihre Führungsfunktion beim Schließen der Ventilplatte 7) der Führungsfläche.

Im gezeigten Ausführungsbeispiel liegen die eben ausgebildeten Führungsflächen parallel zueinander, wobei niedrige Flächenpressungen erzielt werden.

Beim Schließen des Vakuumventils ausgehend von der Offenstellung der Ventilplatte 7 wird diese durch die Aktuatoren 12 zunächst in die Hauptschließrichtung 14 verschoben, bis die Führungselemente 15, 17; 16, 18 miteinander in Eingriff gelangen. Die Führungselemente wirken somit nur über den Endabschnitt der Schließbewegung, nicht aber über den Hauptabschnitt der Schließbewegung zusammen. Bei einer weiteren Verschiebung der Ventilplatte 7 durch die Aktuatoren 12, wobei die Ventilstangen 13 von den Aktuatoren 12 in die gleiche Richtung weiterbewegt werden, kommt es durch die Führung der Ventilplatte 7 mittels der zusammenwirkenden Führungselemente 15, 17; 16, 18 zu einer Bewegung der Ventilplatte winkelig zur Hauptschließrichtung 14, und zwar in eine Richtung die in der Ebene liegt, welche von der Hauptschließrichtung 14 und der Achse 9 der Ventilöffnung 6 aufgespannt wird. Hierbei wird die Ventilplatte an den Ventilsitz angenähert und schließlich an diesen angedrückt. Diese Führung der Ventilplatte 7 im Endabschnitt ihrer Schließbewegung könnte auch als Kulissenführung bezeichnet werden.

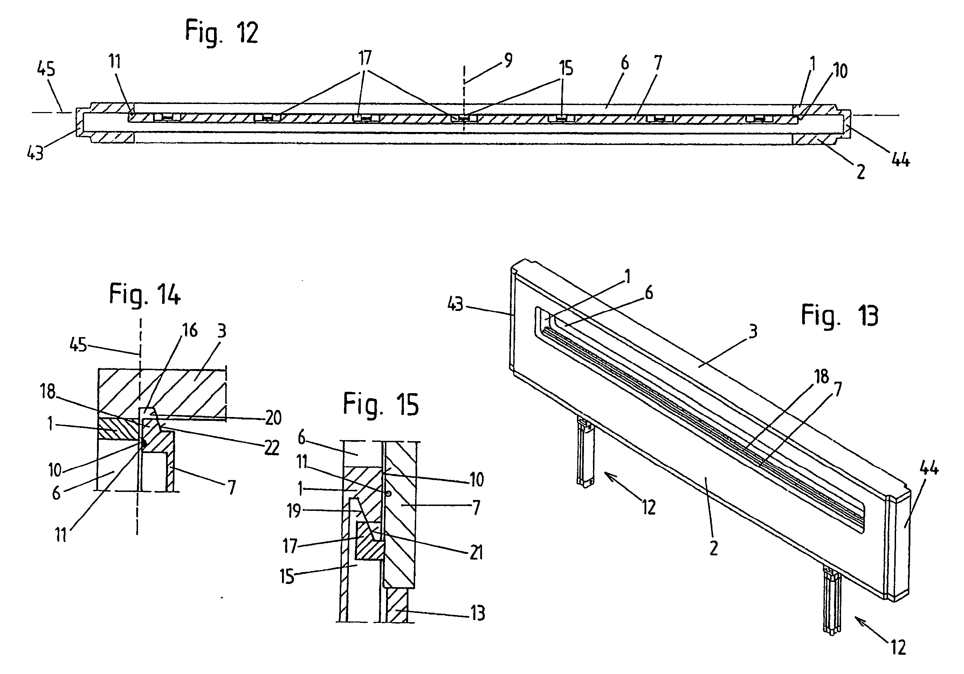

In Figur 14 ist eine Modifikation des zuvor beschriebenen Ausführungsbeispiels des Vakuumventils dargestellt. Hier ist das gehäusefeste, hinter der Ventilöffnung 6 liegende (bezogen auf die Hauptschließrichtung 14) Führungselement 16 an der Seitenwand 3 angeordnet, und zwar ist es als Vertiefung in dieser Seitenwand ausgebildet, welche einen die Führungsfläche 20 bildenden Wandabschnitt besitzt, der einen hinterschnittenen Bereich der Vertiefung begrenzt. Das Führungselement 16 könnte auch als an der Seitenwand 3 angeordneter Vorsprung ausgebildet sein, der einstückig mit der Seitenwand 3 ausgebildet ist oder von einem an der Seitenwand 3 angebrachten Teil gebildet wird und die Führungsfläche 20 aufweist. Das Führungselement 16 wirkt mit einem an der Ventilplatte 6 angeordneten Führungselement 18 zusammen, welches eine Führungsfläche 22 aufweist. Die Führungsflächen 20, 22 sind analog wie im Zusammenhang mit dem Ausführungsbeispiel der Figuren 1 bis 13 beschrieben ausgebildet.

Eine weitere mögliche Modifikation des anhand der Figuren 1 bis 13 beschriebenen Ausführungsbeispiels ist in Figur 15 dargestellt. Hier wird das an der Wand 1 angeordnete, vor der Ventilöffnung 6 liegende (bezogen auf die Hauptschließrichtung 14) Führungselement 15 bzw. ein jeweiliges solches Führungselement 15 von einer Vertiefung in der Wand 1 gebildet, welche eine von einem Wandabschnitt der Vertiefung gebildete Führungsfläche 19 aufweist. Dieses Führungselement 15 wirkt mit einem an der Ventilplatte 7 angeordneten Führungselement 17 zusammen, welches von einem an der Ventilplatte 7 angeordneten Vorsprung gebildet wird, der eine mit der Führungsfläche 19 zusammenwirkende Führungsfläche 21 aufweist. Der das Führungselement 17 bildende Vorsprung kann hierbei von einem an der Ventilplatte 7 angebrachten Teil oder einstückig mit der Ventilplatte 7 ausgebildet sein. Die Führungsflächen 19, 21 sind analog wie im Zusammenhang mit dem Ausführungsbeispiel der Figuren 1 bis 13 beschrieben ausgebildet.

In einer möglichen Modifikation der beschriebenen Ausführungsbeispiele kann von den zwei zusammen wirkenden Führungselementen 15, 17 oder 16, 18 eines anstelle einer Führungsfläche ein oder mehrere Rollen aufweisen, die an der Führungsfläche des anderen der beiden Führungselemente abrollen können, wobei diese Führungsfläche in beschriebener Weise winkelig zur Ebene 45 steht, in der die Dichtfläche 10 bzw. der Dichtring des Ventilsitzes liegt. So könnte beispielsweise das vor der Ventilöffnung 6 an der Wand 1 angeordnete Führungselement bzw. ein jeweiliges solches Führungselement 15 von einer Rolle gebildet werden, die von einem an der Wand 1 angebrachten und von diesem abstehenden Lagerteil drehbar gelagert ist. Analoges gilt für die Ausbildung des stationär zur Wand angeordneten Führungselements 16. Anstelle der stationär zur Wand 1 angeordneten Führungselemente 15, 16 könnten auch die Führungselemente 17, 18 der Ventilplatte 7 solche Rollen umfassen, die von Lagerteilen drehbar gelagert sind.

Die Ausbildung eines erfindungsgemäßen Vakuumventils ist auch ohne ein geschlossenes Ventilgehäuse bzw. ohne eine der die Ventilöffnung 6 aufweisenden Wand 1 gegenüberliegenden Wand 2 möglich. Die die Ventilöffnung 6 aufweisende Wand könnte auch Teil einer Vakuumkammer sein. Hierbei könnte die Ventilplatte 7 innerhalb der Kammer oder außerhalb der Kammer angeordnet sein. Solche Vakuumventile, durch welche eine Öffnung in der Wand einer Kammer absperrbar ist, werden auch als Türen bezeichnet.

Ein in erfindungsgemäßer Weise ausgebildetes Vakuumventil eignet sich insbesondere zum Verschluss von längserstreckten Ventilöffnungen 6, d.h. die quer zur Hauptschließrichtung 14 gemessene Länge der Ventilöffnung ist wesentlich größer als die in Richtung der Hauptschließrichtung 14 gemessene Breite. Beispielsweise kann die quer zur Hauptschließrichtung 14 gemessene Länge der Ventilöffnung 6 mindestens 100 cm betragen. Solche Ventilöffnungen werden für den Transfer von Substraten zwischen Vakuumkammern oder in den Vakuumbereich eingesetzt, beispielsweise bei der Bearbeitung von Paneelen für Flachbildschirme.

Ein erfindungsgemäßes Vakuumventil kann in eine Richtung differenzdruckfest (für Druckunterschiede bis zu einer Atmosphäre) oder in beide Richtungen differenzdruckfest (für Druckunterschiede bis zu einer Atmosphäre) ausgebildet sein.

Wenn das erfindungsgemäße Vakuumventil bei Anwendungen eingesetzt werden soll, bei denen eine Abdichtung der Ventilöffnung 6 nur für einen in Richtung eines Andrückens der Ventilplatte 7 an den Ventilsitz wirkenden Differenzdruck erforderlich ist, so könnte auch vorgesehen sein, dass die Ventilplatte 7 in ihrer Schließstellung durch den mindestens einen Aktuator nur relativ leicht an den Ventilsitz angedrückt wird und die volle Dichtkraft durch den Differenzdruck bewirkt wird. Die Kraft, mit der der Dichtring 11 an die Dichtfläche 10 durch die Wirkung des mindestens einen Aktuators 12 angedrückt wird, kann hierbei vorteilhafterweise weniger als 1 N/mm Dichtungslänge betragen (ohne einwirkenden Differenzdruck). Beispielsweise kann diese Kraft 0,1 - 0,3N/mm Dichtungslänge betragen. Eine solche Ausbildung kann insbesondere bei einer Ausbildung des Vakuumventils als Tür eingesetzt werden.

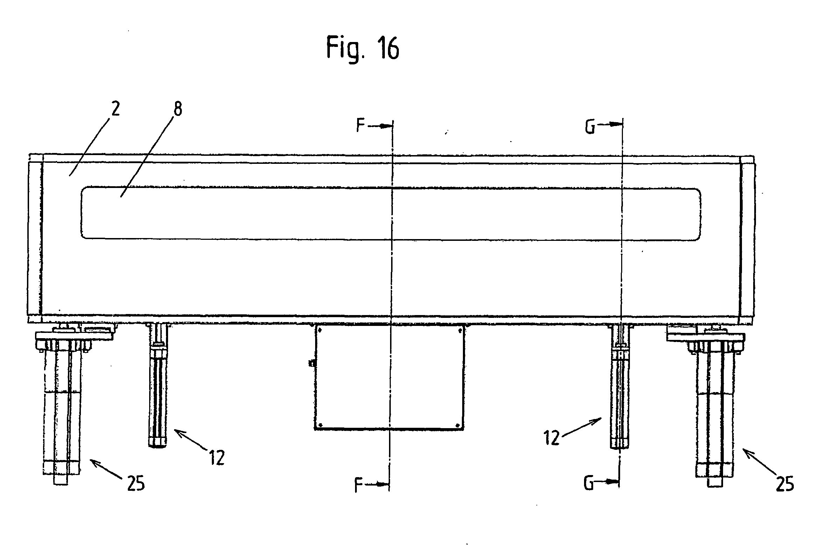

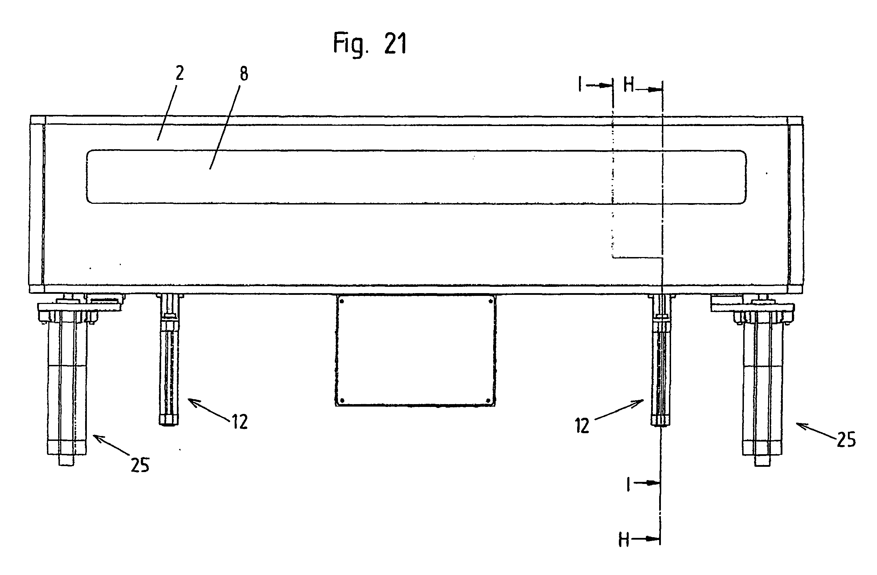

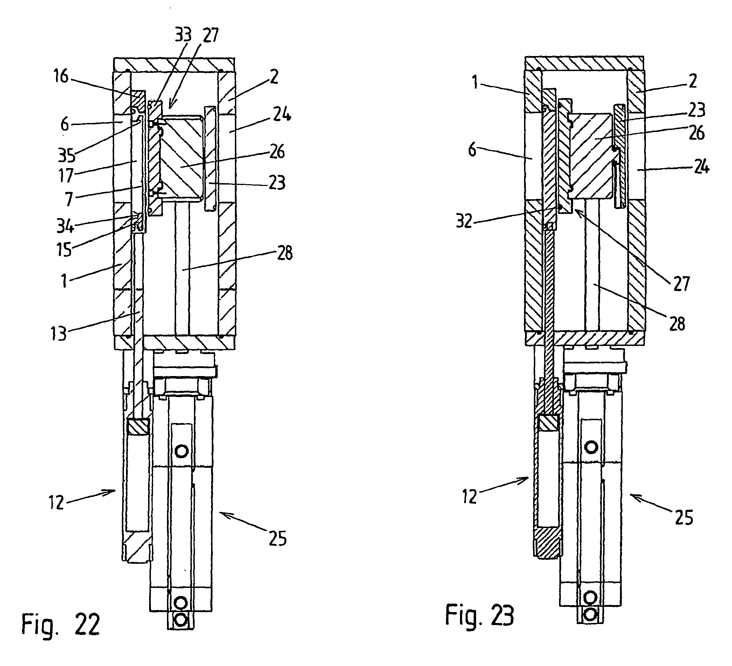

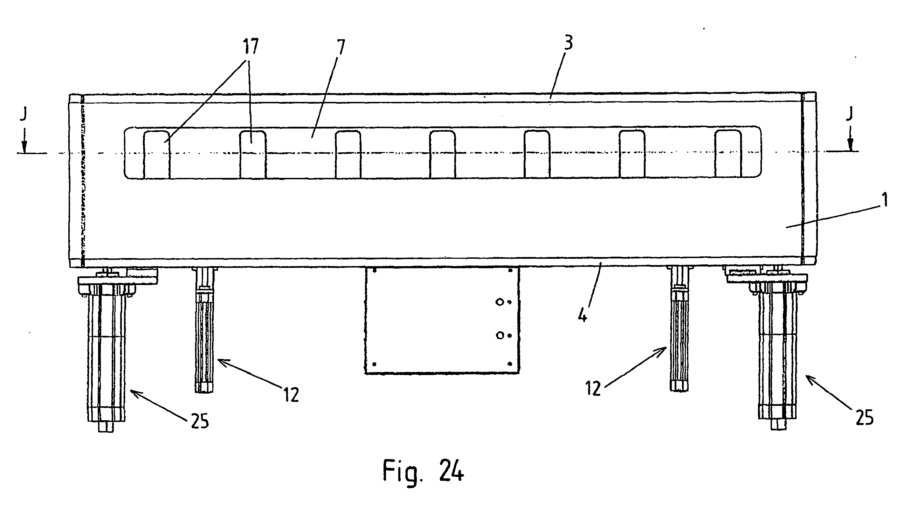

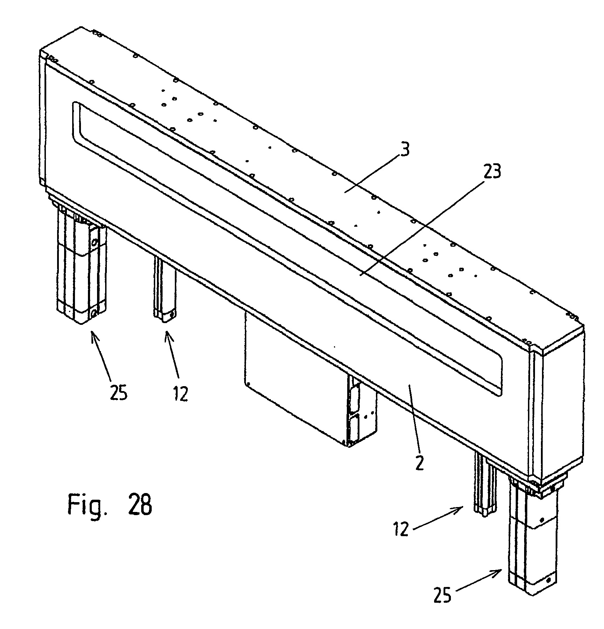

Ein weiteres Ausführungsbeispiel der Erfindung ist in den Figuren 16 bis 28 dargestellt. Zusätzlich zur Ventilplatte 7, die ein erstes Verschlussglied bildet, ist ein zweites Verschlussglied 23 vorhanden, welches unabhängig von der Ventilplatte 7 verstellbar ist. Zusätzlich zu der von der Ventilplatte 7 verschließbaren ersten Ventilöffnung 6 in der ersten Wand 1 ist eine zweite Ventilöffnung 24 in der zweiten Wand 2 vorhanden, welche in einer Offenstellung des zweiten Verschlussgliedes 23 von diesem freigegeben wird und in einer Schließstellung des zweiten Verschlussgliedes 23 von diesem abgedichtet wird.

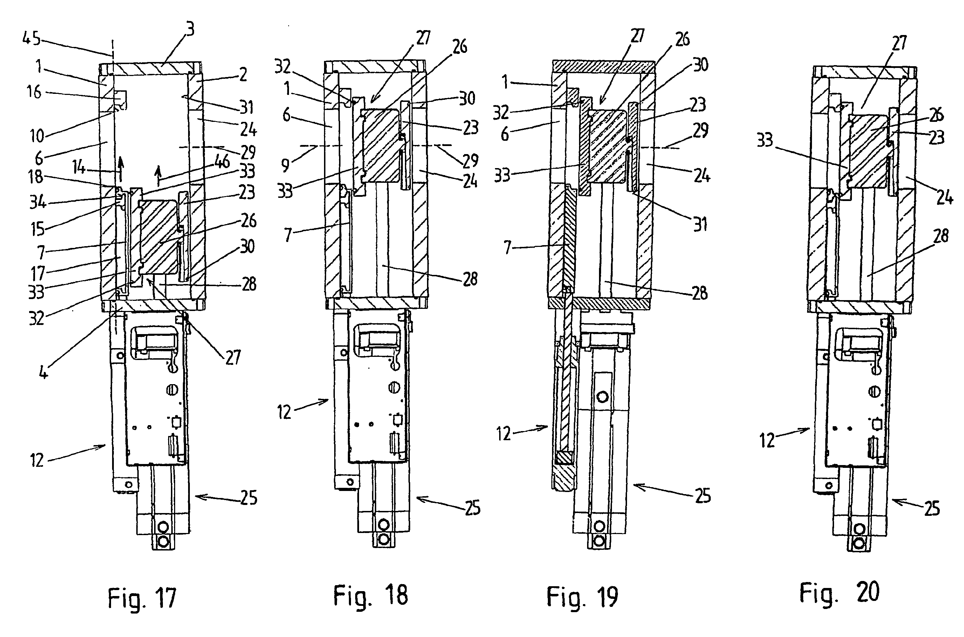

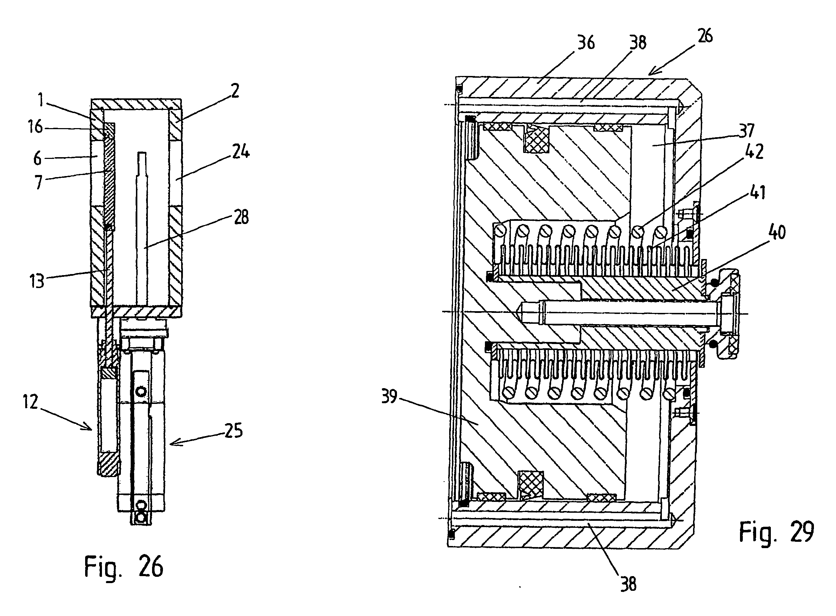

Die Offenstellung des zweiten Verschlussgliedes, in der es die zweite Ventilöffnung 24 freigibt, ist in der Figur 17 dargestellt. Zum Schließen des zweiten Verschlussgliedes 23 ausgehend von dessen Offenstellung wird das zweite Verschlussglied 23 zunächst mittels mindestens eines Aktuators 25, im gezeigten Ausführungsbeispiel sind zwei Aktuatoren 25 vorhanden, in eine Hauptschließrichtung 46 verstellt. Vorzugsweise liegt die Hauptschließrichtung 46 parallel und gleichgerichtet zur Hauptschließrichtung 14 der Ventilplatte 7. Beispielsweise könnte die Hauptschließrichtung 46 des zweiten Verschlussgliedes 23 auch parallel und entgegengerichtet zur Hauptschließrichtung 14 der Ventilplatte 7 liegen. Wenn eine Zwischenstellung des zweiten Verschlussgliedes 23 erreicht ist, in der das zweite Verschlussglied die zweite Ventilöffnung 24 überdeckt, vom die zweite Ventilöffnung 24 umgebenden Ventilsitz aber noch abgehoben ist (vgl. Fig. 18 und 19), so ist die Verstellung des zweiten Verschlussglieds 23 mittels des mindestens einen Aktuators 25 abgeschlossen. Es folgt die Verstellung des zweiten Verschlussgliedes 23 mittels mindestens eines weiteren Aktuators 26. In den Figuren 17 bis 20, 22, 23 und 25 ist der Aktuator 26 nur schematisch als Block dargestellt. Eine mögliche Ausbildung des Aktuators ist in Fig. 29 dargestellt. Vorzugsweise sind in Richtung quer zur Hauptschließrichtung 46 bzw. parallel zur Längserstreckung der zweiten Ventilöffnung 24 mehrere Aktuatoren 26 vorhanden, die synchron betätigt werden.

Das zweite Verschlussglied 23 wird somit von einer Trageinheit 27 getragen, welche den mindestens einen Aktuator 26 umfasst. Im gezeigten Ausführungsbeispiel ist die Trageinheit 27 ist an zwei Ventilstangen 28 gehalten. Es können auch mehr oder weniger als zwei Ventilstangen 28 vorgesehen sein. Die Trageinheit 27 ist an der mindestens einen Ventilstange 28 gehalten. Eine jeweilige Ventilstange 28 wird vom jeweiligen Aktuator 25 verschoben, wobei die Trageinheit 27 und mit ihr das zweite Verschlussglied 23 in die Hauptschließrichtung des zweiten Verschlussgliedes 23 verstellt wird.

Die Verbindung des zweiten Verschlussgliedes 23 mit der Trageinheit 27 erfolgt über den mindestens einen an der Trageinheit 27 angeordneten Aktuator 26, der das zweite Verschlussglied 23 rechtwinkelig zur Hauptschließrichtung des zweiten Verschlussgliedes bzw. parallel zur Achse 29 der zweiten Ventilöffnung 24 in der Wand 2 verstellt. Dadurch kann das zweite Verschlussglied 23 ausgehend von der in den Figuren 18 und 19 dargestellten Zwischenstellung in Richtung zum die zweite Ventilöffnung 24 umgebenden Ventilsitz verschoben werden und an diesen angelegt werden, wobei ein elastischer Dichtring 30 an eine Dichtfläche 31 angedrückt wird. Im gezeigten Ausführungsbeispiel ist der Dichtring 30 am zweiten Verschlussglied 23 angeordnet und die Dichtfläche 31 am Ventilsitz angeordnet. Eine umgekehrte Anordnung ist ebenfalls möglich.

Wenn das zweite Verschlussglied 23 mittels des mindestens einen Aktuators 26 an den die zweite Ventilöffnung 24 umgebenden Ventilsitz angedrückt wird, so stützt sich die Trageinheit 27 auf der der zweiten Ventilöffnung 24 abgewandten Seite ab. Hierbei biegen sich die Ventilstangen 28 etwas. Auf diese Weise wird die zum Andrücken des zweiten Verschlussgliedes 23 an den Ventilsitz benötigte Andrückkraft im Wesentlichen über das Ventilgehäuse (und nicht über die Ventilstangen 28) übertragen.

Die Abstützung der Trageinheit 27 in der Schließstellung des zweiten Verschlussgliedes 23 erfolgt zum Einen an der Ventilplatte 7 und zum Anderen an dem mindestens einen bezogen auf die Hauptschließrichtung 14 hinter der Ventilöffnung 6 angeordneten Führungselement 16. Hierbei ist an der Trageinheit 27 ein elastischer Abstützring 32 angeordnet, über welchen diese Abstützung erfolgt, um einen Kontakt Metall auf Metall zu vermeiden. Auch anders ausgebildete elastische Abstützteile können an der Trageinheit 27 und/oder an den Teilen, an denen sie sich auf ihrer von der zweiten Wand 2 abgewandten Seite abstützt, angeordnet sein.

Die Abstützung kann beispielsweise wie dargestellt über ein plattenförmiges Teil 33 der Trageinheit 27 erfolgen, an dem der Abstützring 32 angeordnet ist oder in anderer Weise ausgebildete elastische Abstützteile angeordnet sein könnten.

Auf der bezogen auf die Hauptschließrichtung 14 hinter der Ventilöffnung 6 liegenden Seite ist eine Abstützung auch an einem anderen gehäusefesten Teil möglich, das an der Wand 1 oder an der von der Wand 1 abstehenden Seitenwand 3 angeordnet ist.

Es ist bevorzugt, wenn in der Offenstellung der Ventilplatte 7 ein bezogen auf die Hauptschließrichtung 14 vorderer Abschnitt der Ventilplatte 7 an die Wand 1 angedrückt ist, um eine definierte stabile Position dieses vorderen Abschnittes der Ventilplatte 7, an welchem die Abstützung der Trageinheit 27 erfolgt, zu erhalten. Diese Anlage des vorderen Abschnitts der Ventilplatte 7 an der Wand 1 kann durch zusammenwirkende Führungsflächen 34, 35 der Führungselemente 15, 17 erfolgen. Hierbei steht mindestens eine dieser Führungsflächen 34, 35 winkelig zur Ebene 45 der Dichtfläche 10 bzw. des Dichtrings des die Ventilöffnung 6 umgebenden Ventilsitzes. Anstelle von zusammenwirkenden Führungsflächen könnte auch eines der beiden Führungselemente 15, 17 mindestens eine Rolle aufweisen, die über die Führungsfläche des anderen der beiden Führungselemente 15, 17 abrollt.

Die Aktuatoren 25, 26 können in herkömmlicher Weise ausgebildet sein, wie dies aus der in der Beschreibungseinleitung genannten US 6,899,316 B2 bekannt ist. Die Trageinheit könnte demnach ein durchgehendes balkenförmiges Teil aufweisen, in dem eine Reihe von Zylinderreimen ausgebildet sind, in welchen Kolben angeordnet sind. Figur 29 zeigt eine dem gegenüber etwas modifizierte Ausführungsform eines Aktuators 26. Ein topfförmiges Teil 36, welches einen Zylinderraum 37 aufweist, ist am plattenförmigen Teil 33 angeschraubt-(Schraublöcher 38 sind in Fig. 29 dargestellt). Im Zylinderraum 37 ist ein Kolben 39 angeordnet, der mittels Druckluft im Zylinderraum verschiebbar ist. Vom Kolben 39 wird eine Kolbenstange 40 betätigt, an der das plattenförmige zweite Verschlussglied 23 befestigt ist. Zur Abdichtung zwischen dem topfförmigen Teil 36 und dem Kolben 39 dient ein Balg 41. Eine Feder 42 spannt den Kolben 39 in eine Position vor, in welcher das zweite Verschlussglied 23 vom die zweite Ventilöffnung 24 umgebenden Ventilsitz abgehoben ist.

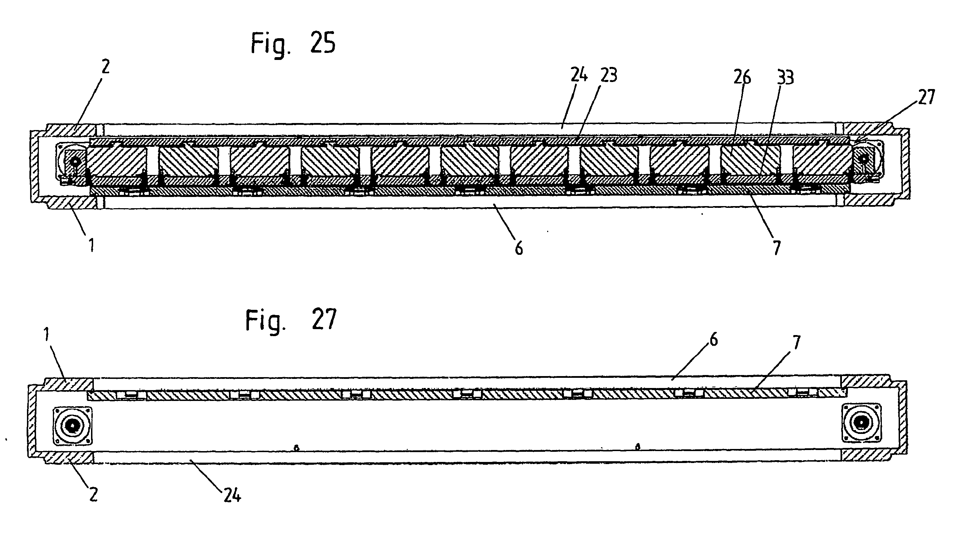

Ein in dieser Weise ausgebildetes Vakuumventil kann beispielsweise in einer Vakuumanlage zur Durchführung von Bearbeitungsschritten an Substraten unter Vakuum eingesetzt werden, insbesondere wenn mehrere Prozesskammern vorhanden sind, in welchen parallel Vakuumprozesse durchgeführt werden können. Im Normalbetrieb verbleibt die Ventilplatte 7 in ihrer Offenstellung und das Öffnen und Schließen des Vakuumventils wird mittels des zweiten Verschlussgliedes 23 durchgeführt, von dem die zweite Ventilöffnung 24 freigegeben oder abgedichtet werden kann. Wenn ein Service des zweiten Verschlussgliedes erforderlich ist, beispielsweise der elastische Dichtring 30 gewechselt werden muss, so wird die erste Ventilöffnung 6 mittels der Ventilplatte 7 abgedichtet. Hierbei befindet sich das zweite Verschlussglied 23 in seiner Offenstellung oder seiner Zwischenstellung. In der Folge kann das Ventilgehäuse des Vakuumventils geöffnet werden und das zweite Verschlussglied für den durchzuführenden Service entfernt werden, wie dies in den Figuren 26 und 27 dargestellt ist. Die Kammer, an der das Vakuumventil über die erste Ventilöffnung 6 angeschlossen ist bzw. der an diese erste Ventilöffnung 6 angeschlossene Teil der Vakuumanlage kann hierbei unter Vakuum gehalten werden. Nach dem durchgeführten Service und der Montage des zweiten Verschlussgliedes kann das Ventilgehäuse wiederum geschlossen werden und nach dem erfolgten Abpumpen die Ventilplatte 7 geöffnet werden.

Bei einem in dieser Weise ausgebildeten Vakuumventil kann eine differenzdruckfeste Ausbildung des zweiten Verschlussgliedes gegen einen im Sinne einer Abhebung des zweiten Verschlussgliedes von dessen Ventilsitz wirkenden Differenzdruck, der bis zu Atmosphärendruck beträgt, entfallen. Wenn ein höherer in diese Richtung wirkender Differenzdruck abgedichtet werden soll, so kann dies über die Ventilplatte 7 erfolgen.

Anstelle der Verstellung des zweiten Verschlussgliedes 23 nach Art der beschriebenen Ausbildung eines L-Ventils könnte auch ein in anderer Weise ausgebildetes L-Ventil eingesetzt werden. Die Bewegung und Verstellung des zweiten Verschlussgliedes 23 könnte auch nach Art eines Schieberventils erfolgen, bei welchem im Endabschnitt der Schließbewegung das zweite Verschlussglied von einer Tragplatte abgespreizt wird und vorzugsweise auch eine auf der gegenüberliegenden Seite der Tragplatte angeordnete Stützplatte von der Tragplatte abgespreizt wird. Die Tragplatte bzw., falls vorhanden, die Stützplatte kann sich hierbei analog dem plattenförmigen Teil 33 an der Ventilplatte 7 und an einem hinter der ersten Ventilöffnung 6 (bezogen auf die Hauptschließrichtung 14) liegenden Teil abstützen. Bei der Ausbildung nach Art eines Schieberventils mit einem Spreizmechanismus muss nur eine Art von Aktuator vorgesehen sein, der die bzw. die jeweilige Ventilstange verstellt und hier durch das zweite Verschlussglied 23 über den gesamten Schließweg verstellt.

Es könnte für den Verschluss der zweiten Ventilöffnung durch das zweite Verschlussglied 23 auch eine Konstruktion eingesetzt werden, bei der nur eine lineare Verstellung des Verschlussgliedes erfolgt, wobei der Ventilsitz eine dreidimensionale Ausbildung aufweist und in der Schließstellung des zweiten Verschlussglieds ein entsprechend dreidimensional ausgebildeter Dichtring an eine Dichtfläche mit einem korrespondierenden Verlauf angepresst ist.

### Legende

### zu den Hinweisziffern:

| | | | |
|---|---|---|---|
| 1 | Wand | 32 | Abstützring |
| 2 | Wand | 33 | plattenförmiges Teil |
| 3 | Seitenwand | 34 | Führungsfläche |
| 4 | Seitenwand | 35 | Führungsfläche |
| 5 | Innenraum | 36 | topfförmiges Teil |
| 6 | Ventilöffnung | 37 | Zylinderraum |
| 7 | Ventilplatte | 38 | Schraubloch |
| 8 | Öffnung | 39 | Kolben |
| 9 | Achse | 40 | Kolbenstange |
| 10 | Dichtfläche | 41 | Balg |
| 11 | Dichtring | 42 | Feder |
| 12 | Aktuator | 43 | Seitenwand |
| 13 | Ventilstange | 44 | Seitenwand |
| 14 | Hauptschließrichtung | 45 | Ebene |
| 15 | Führungselement | 46 | Hauptschließrichtung |
| 16 | Führungselement | | |
| 17 | Führungselement | | |
| 18 | Führungselement | | |
| 19 | Führungsfläche | | |
| 20 | Führungsfläche | | |
| 21 | Führungsfläche | | |
| 22 | Führungsfläche | | |
| 23 | zweites Verschlussglied | | |
| 24 | zweite Ventilöffnung | | |
| 25 | Aktuator | | |
| 26 | Aktuator | | |
| 27 | Trageinheit | | |
| 28 | Ventilstange | | |
| 29 | Achse | | |
| 30 | Dichtring | | |
| 31 | Dichtfläche | | |

## Patentansprüche

1. Vakuumventil umfassend
- eine Wand (1) mit einer Ventilöffnung (6) und einem die Ventilöffnung (6) umgebenden Ventilsitz, der eine in einer Ebene liegende Dichtfläche (10) oder einen in einer Ebene liegenden Dichtring aufweist, und
- eine Ventilplatte (7), die über einen Schließweg von einer Offenstellung, in der sie die Ventilöffnung (6) freigibt, in eine Schtießstettung verstellbar ist, in der sie die Ventilöffnung (6) verschließt und die einen Dichtring (11), der in der Schließstellung an die Dichtfläche (10) des Ventilsitzes angedrückt ist, oder eine Dichtfläche aufweist, an die in der Schließstellung der Dichtring des Ventilsitzes angedrückt ist,
- wobei die Ventilplatte (7) beim Schließen des Vakuumventils ausgehend von der Offenstellung der Ventilplatte (7) über einen Hauptabschnitt des Schließweges in eine Hauptschließrichtung (14) verstellt wird, die parallel zur Ventilplatte (7) und parallel zur Ebene der Dichtfläche (10) bzw. des Dichtrings des Ventilsitzes ist, und im Anschluss an den Hauptabschnitt des Schließweges zur Heranführung der Ventilplatte (7) an den Ventilsitz über einen winkelig zur Ventilplatte (7) und winkelig zur Ebene der Dichtfläche (10) bzw. des Dichtrings des Ventilsitzes verlaufenden Endabschnitt des Schließweges verstellt wird, und
wobei mindestens ein die Ventilplatte (7) über den Endabschnitt des Schließweges führendes Führungselement (15, 16), welches mit einem an der Ventilplatte (7) angeordneten Führungselement (17, 18) zusammenwirkt, an der Wand (1) angeordnet ist, und die Führung der Ventilplatte (7) über den Endabschnitt des Schließweges durch winkelig zur Ebene (45) der Dichtfläche (10) bzw. des Dichtrings des Ventilsitzes stehende Führungsflächen (19, 20, 21, 22) erfolgt, von denen mindestens eine an einem Führungselement (17, 18) der Ventitplatte (7) oder an einem an der Wand (1) angeordneten Führungselement (15, 16) angeordnet ist, und
wobei ein bezogen auf die Hauptschließrichtung (14) vor der Ventilöffnung (6) liegendes Führungselement (15) von einem Vorsprung der Wand (1) oder einem an der Wand angebrachten und von dieser abstehenden Teil gebildet wird und in eine Vertiefung in der Ventilplatte (7) ragt oder ein Führungselement (17) der Ventilplatte (7) von einem Vorsprung der Ventilplatte (7) oder einem an der Ventilplatte (7) angebrachten und von dieser abstehenden Teil gebildet wird und in eine bezogen auf die Hauptschließrichtung (14) vor der Ventilöffnung (6) liegende Vertiefung in der Wand (1) ragt.

2. Vakuumventil nach Anspruch 1, **dadurch gekennzeichnet, dass** mindestens ein bezogen auf die Hauptschließrichtung (14) vor der Ventilöffnung (6) liegendes, an der Wand (1) angeordnetes Führungselement (15) und mindestens ein bezogen auf die Hauptschließrichtung (14) hinter der Ventilöffnung (6) liegendes, zur Wand (1) stationäres Führungselement (16) vorhanden sind, welche jeweils mit einem Führungselement (17, 18) der Ventilplatte (7) zusammenwirken.

3. Vakuumventil nach Anspruch 1 oder 2. **dadurch gekennzeichnet, dass** am Vorsprung der Wand (1) eine Führungsfläche (19) angeordnet ist, die winkelig zur Ebene (45) der Dichtfläche (10) bzw. des Dichtrings des Ventilsitzes steht und mit einem Führungselement.(17) der Ventilplatte (7) zusammenwirkt, und/oder an einem Wandabschnitt der Vertiefung in der Ventilplatte (7) eine Führungsfläche (21) angeordnet ist, die winkelig zur Ebene (45) der Dichtfläche (10) bzw. des Dichtrings des Ventilsitzes steht und mit dem an der Wand (1) angeordneten Führungselement (15) zusammenwirkt.

4. Vakuumventil nach Anspruch 3, **dadurch gekennzeichnet, dass** an der Wand (1) mehrere bezogen auf die Hauptschließrichtung (14) vor der Ventilöffnung (6) liegende Führungselemente (15) angeordnet sind und an der Ventilplatte (7) mehrere Vertiefungen angeordnet sind, in welche diese an der Wand (1) angeordneten Führungselemente (15) ragen.

5. Vakuumventil nach einem der Ansprüche 1 bis 4, **dadurch gekennzeichnet, dass** ein Wandabschnitt der Vertiefung in der Wand (1) eine Führungsfläche (19) aufweist, die winkelig zur Ebene (45) der Dichtfläche (10) bzw. des Dichtrings des Ventilsitzes steht und mit dem Führungselement (17) der Ventilplatte (7) zusammenwirkt, und/oder der an der Ventilplatte (7) angeordnete Vorsprung eine Führungsfläche (21) aufweist, die winkelig zur Ebene (45) der Dichtfläche (10) bzw. des Dichtrings des Ventilsitzes steht und mit dem an der Wand angeordneten Führungselement (15) zusammenwirkt.

6. Vakuumventil nach Anspruch 5, **dadurch gekennzeichnet, dass** an der Ventilplatte (7) mehrere Führungselemente (17) angeordnet sind und die Wand (1) im Bereich bezogen auf die Hauptschließrichtung (14) vor der Ventilöffnung (6) mehrere Vertiefungen aufweist, in welche die Führungselemente (17) der Ventilplatte (7) ragen.

7. Vakuumventil nach einem der Ansprüche 1 bis 6, **dadurch gekennzeichnet, dass** ein bezogen auf die Hauptschließrichtung (14) hinter der Ventilöffnung (6) liegendes Führungselement (16) von einem Vorsprung der Wand (1) oder einem an der Wand angebrachten und von diesem abstehenden Teil gebildet wird und mit einem Führungselement (18) der Ventilplatte zusammenwirkt, wobei das an der Wand (1) angeordnete Führungselement (16) und/oder das mit diesem zusammenwirkende an der Ventilplatte (7) angeordnete Führungselement (18) eine Führungsfläche (20, 22) aufweist, die winkelig zur Ebene (45) der Dichtfläche (10) bzw. des Dichtrings des Ventilsitzes steht.

8. Vakuumventil nach einem der Ansprüche 1 bis 7, **dadurch gekennzeichnet, dass** ein bezogen auf die Hauptschließrichtung (14) hinter der Ventilöffnung (6) liegendes Führungselement (16) an einer Seitenwand (3) des Vakuumventils angeordnet ist, die von der die Ventilöffnung (6) aufweisenden Wand (1) absteht und mit einem an der Ventilplatte (7) angeordneten Führungselement (18) zusammenwirkt, wobei das an der Seitenwand (3) angeordnete Führungselement (16) und/oder das an der Ventilplatte (7) angeordnete Führungselement (18) eine winkelig zur Ebene (45) der Dichtfläche (10) bzw. des Dichtrings des Ventilsitzes stehende Führungsfläche (20, 22) aufweist.

9. Vakuumventil nach Anspruch 7 oder 8, **dadurch gekennzeichnet, dass** das mit dem mindestens einen bezogen auf die Hauptschließrichtung (14) hinter der Ventilöffnung (6) angeordneten zur Wand (1) stationären Führungselement (16) zusammenwirkende Führungselement (18) der Ventilplatte (7) von einem am bezogen auf die Hauptschließrichtung (14) vorderen Rand der Ventilplatte (7) vorstehenden Fortsatz der Ventilplatte gebildet wird, wobei vorzugsweise an der von der Wand (1) abgewandten Seite des Fortsatzes eine Führungsfläche (22) angeordnet ist, die winkelig zur Ebene (45) der Dichtfläche (10) bzw. des Dichtrings des Ventilsitzes steht.

10. Vakuumventil nach einem der Ansprüche 1 bis 9, **dadurch gekennzeichnet, dass** das Vakuumventil ein Ventilgehäuse mit einem die Ventilplatte (7) aufnehmenden Innenraum (5) aufweist, der auf einer Seite von der die Ventilöffnung (6) aufweisenden Wand (1) begrenzt ist und einen Vakuumbereich des Vakuumventils bildet, wobei vorzugsweise der Innenraum (5) auf der die Ventilöffnung (6) aufweisenden Wand (1) gegenüberliegenden Seite von einer Wand (2) begrenzt ist, die eine weitere Öffnung (8, 24) aufweist.

11. Vakuumventil nach Anspruch 10, **dadurch gekennzeichnet, dass** die Führungselemente (15, 16, 17, 18), welche die Ventilplatte (7) über den Endabschnitt ihres Schließweges führen, im Innenraum (5) des Ventilgehäuses angeordnet sind.

12. Vakuumventil nach Anspruch 10 oder 11, **dadurch gekennzeichnet, dass** im Innenraum (5) des Ventilgehäuses zusätzlich zur Ventilplatte (7), welche ein erstes Verschlussglied zum Verschluss der ersten Ventilöffnung (6) in der ersten Wand (1) bildet, ein zweites Verschlussglied (23) angeordnet ist, welches zwischen einer Offenstellung, in der es eine in einer zweiten Wand (2) angeordnete zweite Ventitöffnung (24) freigibt, und einer Schließstellung, in der es die zweite Ventilöffnung (24) verschließt und abdichtet, unabhängig von der Ventilplatte (7) verstellbar ist.

13. Vakuumventil nach Anspruch 12, **dadurch gekennzeichnet, dass** das zweite Verschlussglied (23) in eine Zwischenstellung verstellbar ist, in der es die zweite Ventilöffnung (24) überdeckt, aber von einem die zweite Ventilöffnung (24) umgebenden zweiten Ventilsitz abgehoben ist, wobei vorzugsweise zur Verstellung des zweiten Verschlussgliedes (23) zwischen der Offenstellung und der Zwischenstellung mindestens ein Aktuator (25) vorhanden ist, der außerhalb des Ventilgehäuses angeordnet ist und von dem mindestens eine Ventilstange (28) achsial verstellbar ist, mit der sich das zweite Verschlussglied (23) mitbewegt.

14. Vakuumventil nach Anspruch 13, **dadurch gekennzeichnet, dass** mindestens ein weiterer Aktuator (26) vorhanden ist, der an einer Trageinheit (27) angeordnet ist, welche an der mindestens einen Ventilstange (28) angebracht ist, und mittels dem das zweite Verschlussglied (23) zwischen der Zwischenstellung und der Schließstellung verstellbar ist.

15. Vakuumventil nach Anspruch 13 oder 14, **dadurch gekennzeichnet, dass** ein bei der Verstellung des zweiten Verschlussgliedes (23) zwischen seiner Offenstellung und seiner Zwischenstellung mit dem zweiten Verschlussglied (23) mitbewegtes Teil (33) sich in der Schließstellung des zweiten Verschlussglieds (23) im Bereich seiner von der zweiten Ventilöffnung (24) abgewandten Seite an der Ventilplatte (7) abstützt, wobei vorzugsweise sich dieses bei der Verstellung des zweiten Verschlussgliedes (23) zwischen seiner Offenstellung und seiner Zwischenstellung mit dem zweiten Verschlussglied (23) mitbewegte Teil (33) im Bereich seiner von der zweiten Ventilöffnung (24) abgewandten Seite weiters an mindestens einem Führungselement (16) abstützt, welches an der die erste Ventilöffnung (6) aufweisenden ersten Wand (1) oder an einer von der ersten Wand (1) abstehenden Seitenwand (3) angeordnet ist.

## Claims

1. A vacuum valve comprising
- a wall (1) with a valve opening (6) and a valve seat surrounding the valve opening (6), which seat has a sealing surface (10) which lies in a plane or a sealing ring which lies in a plane, and
- a valve plate (7), which can be adjusted over a closing path from an open position, in which it releases the valve opening (6), into a closed position, in which it closes the valve opening (6), and which has a sealing ring (11) which in the closed position is pressed against the sealing surface (10) of the valve seat, or has a sealing surface against which the sealing ring of the valve seat is pressed in the closed position,
- the valve plate (7) upon the closure of the vacuum valve starting from the open position of the valve plate (7) being adjusted over a main section of the closing path in a main closing direction (14) which is parallel to the valve plate (7) and parallel to the plane of the sealing surface (10) or of the sealing ring of the valve seat, and following the main section of the closing path, for bringing the valve plate (7) up to the valve seat, being adjusted over an end section of the closing path which extends at an angle to the valve plate (7) and at an angle to the plane of the sealing surface (10) or of the sealing ring of the valve seat, and
at least one guide element (15, 16) which guides the valve plate (7) over the end section of the closing path, and which cooperates with a guide element (17, 18) arranged on the valve plate (7), being arranged on the wall (1), and the valve plate (7) being guided over the end section of the closing path by guide surfaces (19, 20, 21, 22) which are at an angle to the plane (45) of the sealing surface (10) or of the sealing ring of the valve seat, of which surfaces at least one is arranged on a guide element (17, 18) of the valve plate (7) or on a guide element (15, 16) which is arranged on the wall (1), and
a guide element (15) which relative to the main closing direction (14) is located before the valve opening (6) being formed by a projection of the wall (1) or a part which is attached to the wall and stands proud therefrom, and protruding into a recess in the valve plate (7), or a guide element (17) of the valve plate (7) being formed by a projection of the valve plate (7) or a part which is attached to the valve plate (7) and stands proud therefrom, and protruding into a recess in the wall (1) which relative to the main closing direction (14) is located before the valve opening (6).

2. A vacuum valve according to Claim 1, **characterised in that** at least one guide element (15) which relative to the main closing direction (14) is located before the valve opening (6) and is arranged on the wall (1), and at least one guide element (16) which relative to the main closing direction (14) is located after the valve opening (6) and is stationary relative to the wall (1) are present, which elements in each case cooperate with a guide element (17, 18) of the valve plate (7).

3. A vacuum valve according to Claim 1 or 2, **characterised in that** a guide surface (19) is arranged on the projection of the wall (1), which surface is at an angle to the plane (45) of the sealing surface (10) or of the sealing ring of the valve seat, and cooperates with a guide element (17) of the valve plate (7), and/or a guide surface (21) is arranged on a wall section of the recess in the valve plate (7), which surface is at an angle to the plane (45) of the sealing surface (10) or of the sealing ring of the valve seat and cooperates with the guide element (15) which is arranged on the wall (1).

4. A vacuum valve according to Claim 3, **characterised in that** a plurality of guide elements (15) which relative to the main closing direction (14) are located before the valve opening (6) are arranged on the wall (1) and a plurality of recesses are arranged on the valve plate (7), into which recesses these guide elements (15) which are arranged on the wall (1) protrude.

5. A vacuum valve according to one of Claims 1 to 4, **characterised in that** a wall section of the recess in the wall (1) has a guide surface (19) which is at an angle to the plane (45) of the sealing surface (10) or of the sealing ring of the valve seat and cooperates with the guide element (17) of the valve plate (7), and/or the projection which is arranged on the valve plate (7) has a guide surface (21) which is at an angle to the plane (45) of the sealing surface (10) or of the sealing ring of the valve seat and cooperates with the guide element (15) which is arranged on the wall.

6. A vacuum valve according to Claim 5, **characterised in that** a plurality of guide elements (17) are arranged on the valve plate (7), and the wall (1) in the region relative to the main closing direction (14) before the valve opening (6) has a plurality of recesses into which the guide elements (17) of the valve plate (7) protrude.

7. A vacuum valve according to one of Claims 1 to 6, **characterised in that** a guide clement (16) which relative to the main closing direction (14) is located after the valve opening (6) is formed by a projection of the wall (1) or a part which is attached to the wall and stands proud therefrom, and cooperates with a guide element (18) of the valve plate, the guide element (16) which is arranged on the wall (1) and/or the guide element (18) which cooperates therewith and is arranged on the valve plate (7) having a guide surface (20, 22) which is at an angle to the plane (45) of the sealing surface (10) or of the sealing ring of the valve seat.

8. A vacuum valve according to one of Claims 1 to 7, **characterised in that** a guide element (16) which relative to the main closing direction (14) is located after the valve opening (6) is arranged on a side wall (3) of the vacuum valve which stands proud from the wall (1) which has the valve opening (6), and cooperates with a guide element (18) which is arranged on the valve plate (7), the guide element (16) which is arranged on the side wall (3) and/or the guide element (18) which is arranged on the valve plate (7) having a guide surface (20, 22) which is at an angle to the plane (45) of the sealing surface (10) or of the sealing ring of the valve seat.

9. A vacuum valve according to Claim 7 or 8, **characterised in that** the guide element (18) of the valve plate (7) which cooperates with the at least one guide element (16) which relative to the main closing direction (14) is arranged after the valve opening (6) and is stationary relative to the wall (1) is formed by a continuation of the valve plate which projects on the front edge, relative to the main closing direction (14), of the valve plate (7), with preferably a guide surface (22) being arranged on that side of the continuation which is remote from the wall (1), which surface is at an angle to the plane (45) of the sealing surface (10) or of the sealing ring of the valve seat.

10. A vacuum valve according to one of Claims 1 to 9, **characterised in that** the vacuum valve has a valve housing with an interior (5) which receives the valve plate (7) and which on one side is defined by the wall (1) which has the valve opening (6), and forms a vacuum region of the vacuum valve, with preferably the interior (5) on the side opposite the wall (1) which has the valve opening (6) being defined by a wall (2) which has a further opening (8, 24).

11. A vacuum valve according to Claim 10, **characterised in that** the guide elements (15, 16, 17, 18) which guide the valve plate (7) over the end section of its closing path are arranged in the interior (5) of the valve housing.

12. A vacuum valve according to Claim 10 or 11, **characterised in that** in the interior (5) of the valve housing, in addition to the valve plate (7) which forms a first closure member for closing the first valve opening (6) in the first wall (1), a second closure member (23) is arranged which can be adjusted between an open position, in which it releases a second valve opening (24) arranged in a second wall (2), and a closed position, in which it closes and seals off the second valve opening (24), independently of the valve plate (7).

13. A vacuum valve according to Claim 12, **characterised in that** the second closure member (23) is adjustable into an intermediate position in which it covers the second valve opening (24), but is lifted off from a second valve seat which surrounds the second valve opening (24), with preferably at least one actuator (25) being present for adjusting the second closure member (23) between the open position and the intermediate position, which actuator is arranged outside the valve housing and is axially adjustable by the at least one valve rod (28) with which the second closure member (23) jointly moves.

14. A vacuum valve according to Claim 13, **characterised in that** at least one further actuator (26) is present which is arranged on a supporting unit (27) which is attached to the at least one valve rod (28), and by means of which actuator the second closure member (23) is adjustable between the intermediate position and the closed position.

15. A vacuum valve according to Claim 13 or 14, **characterised in that** a part (33) which is jointly moved with the second closure member (23) upon the adjustment of the second closure member (23) between its open position and its intermediate position is supported on the valve plate (7) in the closed position of the second closure member (23) in the region of its side which is remote from the second valve opening (24), with preferably this part (33) which is jointly moved with the second closure member (23) upon the adjustment of the second closure member (23) between its open position and Its intermediate position in the region of its side which is remote from the second valve opening (24) further being supported on at least one guide element (16) which is arranged on the first wall (1) which bears the first valve opening (6) or on a side wall (3) which stands proud from the first wall (1).

## Revendications

1. Soupape de contrôle de vide, comprenant :
- une paroi (1) avec une ouverture de soupape (6) et un siège de soupape entourant l'ouverture de soupape (6), lequel présente une surface d'étanchéité (10) située sur un plan ou une bague d'étanchéité située sur un plan, et
- une lame de soupape (7) déplaçable sur une course de fermeture, d'une position d'ouverture où elle libère l'ouverture de soupape (6), à une position de fermeture où elle obture l'ouverture de soupape (6) et comportant une bague d'étanchéité (11) serrée contre la surface d'étanchéité (10) du siège de soupape en position de fermeture, ou comportant une surface d'étanchéité contre laquelle la bague d'étanchéité du siège de soupape est serrée en position de fermeture,
- où la lame de soupape (7) est déplacée lors de la fermeture de la soupape de contrôle de vide, depuis la position d'ouverture de ladite lame de soupape (7) sur un segment principal de la course de fermeture dans une direction de fermeture principale (14) parallèle à la lame de soupape (7) et parallèle au plan de la surface d'étanchéité (10) ou de la bague d'étanchéité du siège de soupape, avant d'être déplacée du segment principal de la course de fermeture sur un segment final de la course de fermeture s'étendant angulairement par rapport à la lame de soupape (7) et angulairement par rapport au plan de la surface d'étanchéité (10) ou de la bague d'étanchéité du siège de soupape, pour amener la lame de soupape (7) contre le siège de soupape, et
où est disposé sur la paroi (1) au moins un élément de guidage (15, 16) guidant la lame de soupape (7) sur le segment final de la course de fermeture et coopérant avec un élément de guidage (17, 18) disposé contre la lame de soupape (7), le guidage de la lame de soupape (7) étant effectué sur le segment final de la course de fermeture par des surfaces de guidage (19, 20, 21, 22) s'étendant angulairement par rapport au plan (45) de la surface d'étanchéité (10) ou de la bague d'étanchéité du siège de soupape, dont au moins une est disposée sur un élément de guidage (17, 18) de la lame de soupape (7) ou sur un élément de guidage (15, 16) disposé sur la paroi (1), et
où un élément de guidage (15) situé en amont de l'ouverture de soupape (6) par rapport à la direction de fermeture principale (14) est formé par une saillie de la paroi (1) ou par une pièce appliquée contre la paroi et faisant saillie de celle-ci et pénétrant dans un évidement de la lame de soupape (7), ou bien un élément de guidage (17) de la lame de soupape (7) est formé par une saillie de lame de soupape (7) ou par une pièce appliquée contre la lame de soupape (7) et faisant saillie de celle-ci et pénétrant dans un évidement de la paroi (1) situé en amont de l'ouverture de soupape (6) par rapport à la direction de fermeture principale (14).

2. Soupape de contrôle de vide selon la revendication 1, **caractérisée en ce que** sont prévus au moins un élément de guidage (15) situé en amont de l'ouverture de soupape (6) par rapport à la direction de fermeture principale (14) et disposé contre la paroi (1) et au moins un élément de guidage (16) situé en aval de l'ouverture de soupape (6) par rapport à la direction de fermeture principale (14) et fixe par rapport à la paroi (1), lesquels coopèrent chacun avec un élément de guidage (17, 18) de la lame de soupape (7).

3. Soupape de contrôle de vide selon la revendication 1 ou 2, **caractérisée en ce qu'**une une surface de guidage (19) est disposée sur la paroi (1), laquelle s'étend angulairement par rapport au plan (45) de la surface d'étanchéité (10) ou de la bague d'étanchéité du siège de soupape et coopère avec un élément de guidage (17) de la lame de soupape (7), et/ou une surface de guidage (21) est disposée sur une partie de paroi de l'évidement dans la lame de soupape (7), laquelle s'étend angulairement par rapport au plan (45) de la surface d'étanchéité (10) ou de la bague d'étanchéité du siège de soupape et coopère avec l'élément de guidage (15) disposé sur la paroi (1).

4. Soupape de contrôle de vide selon la revendication 3, **caractérisée en ce que** plusieurs éléments de guidage (15) situés en amont de l'ouverture de soupape (6) par rapport à la direction de fermeture principale (14) sont disposés sur la paroi (1), et **en ce que** plusieurs évidements sont ménagés sur la lame de soupape (7), où pénètrent lesdits éléments de guidage (15) disposés sur la paroi (1).

5. Soupape de contrôle de vide selon l'une des revendications 1 à 4, **caractérisée en ce qu'**une partie de paroi de l'évidement dans la paroi (1) présente une surface de guidage (19) s'étendant angulairement par rapport au plan (45) de la surface d'étanchéité (10) ou de la bague d'étanchéité du siège de soupape et coopérant avec l'élément de guidage (17) de la lame de soupape (7), et/ou **en ce que** la saillie disposée sur la lame de soupape (7) présente une surface de guidage (21) s'étendant angulairement par rapport au plan (45) de la surface d'étanchéité (10) ou de la bague d'étanchéité du siège de soupape et coopérant avec l'élément de guidage (15) disposé sur la paroi.

6. Soupape de contrôle de vide selon la revendication 5, **caractérisée en ce que** plusieurs éléments de guidage (17) sont disposés sur la lame de soupape (7), et **en ce que** la paroi (1) présente plusieurs évidements dans la zone en amont de l'ouverture de soupape (6) par rapport à la direction de fermeture principale (14), où pénètrent les éléments de guidage (17) de la lame de soupape (7).

7. Soupape de contrôle de vide selon l'une des revendications 1 à 6, **caractérisée en ce qu'**un élément de guidage (16) situé en aval de l'ouverture de soupape (6) par rapport à la direction de fermeture principale (14) est formé par une saillie de la paroi (1) ou par une pièce appliquée contre la paroi et faisant saillie de celle-ci, et coopère avec un élément de guidage (18) de la lame de soupape, l'élément de guidage (16) disposé sur la paroi (1) et/ou l'élément de guidage (18) coopérant avec celui-ci et disposé sur la lame de soupape (7) formant une surface de guidage (20, 22) s'étendant angulairement par rapport au plan (45) de la surface d'étanchéité (10) ou de la bague d'étanchéité du siège de soupape.

8. Soupape de contrôle de vide selon l'une des revendications 1 à 7, **caractérisée en ce qu'**un élément de guidage (16) situé en aval de l'ouverture de soupape (6) par rapport à la direction de fermeture principale (14) est disposé sur une paroi latérale (3) de la soupape de contrôle de vide, laquelle fait saillie de la paroi (1) présentant l'ouverture de soupape (6) et coopère avec un élément de guidage (18) disposé sur la lame de soupape (7), l'élément de guidage (16) disposé sur la paroi latérale (3) et/ou l'élément de guidage (18) disposé sur la lame de soupape (7) présentant une surface de guidage (20, 22) qui s'étend angulairement par rapport au plan (45) de la surface d'étanchéité (10) ou de la bague d'étanchéité du siège de soupape.

9. Soupape de contrôle de vide selon la revendication 7 ou 8, **caractérisée en ce que** l'élément de guidage (18) de la lame de soupape (7) coopérant avec l'élément ou les éléments de guidage (16) situés en aval de l'ouverture de soupape (6) par rapport à la direction de fermeture principale (14), fixes par rapport à la paroi (1) est formé par un prolongement la lame de soupape en saillie sur le bord avant de la lame de soupape (7) par rapport à la direction de fermeture principale (14), une surface de guidage (22) étant préférentiellement disposée sur le côté du prolongement distant de la paroi (1), laquelle s'étend angulairement par rapport au plan (45) de la surface d'étanchéité (10) ou de la bague d'étanchéité du siège de soupape.

10. Soupape de contrôle de vide selon l'une des revendications 1 à 9, **caractérisée en ce que** la soupape de contrôle de vide comporte un carter de soupape avec un compartiment intérieur (5) recevant la lame de soupape (7), lequel est délimité d'un côté par la paroi (1) présentant l'ouverture de soupape (6) et forme une zone de vide de la soupape de contrôle de vide, le compartiment intérieur (5) étant préférentiellement délimité par une paroi (2) sur le côté opposé à la paroi (1) présentant l'ouverture de soupape (6), laquelle présente une autre ouverture (8, 24).

11. Soupape de contrôle de vide selon la revendication 10, **caractérisée en ce que** les éléments de guidage (15, 16, 17, 18) qui guident la lame de soupape (7) sur le segment final de sa course de fermeture sont disposés dans le compartiment intérieur (5) du carter de soupape.

12. Soupape de contrôle de vide selon la revendication 10 ou 11, **caractérisée en ce qu'**en plus de la lame de soupape (7), laquelle forme un premier élément de fermeture destiné à obturer la première ouverture de soupape (6) dans la première paroi (1), un deuxième élément de fermeture (23) est disposé dans le compartiment intérieur (5) du carter de soupape, lequel est déplaçable indépendamment de la lame de soupape (7) entre une position d'ouverture, où il libère une deuxième ouverture de soupape (24) ménagée dans une deuxième paroi (2), et une position de fermeture, où il obture de manière étanche la deuxième ouverture de soupape (24).

13. Soupape de contrôle de vide selon la revendication 12, **caractérisée en ce que** le deuxième élément de fermeture (23) est déplaçable vers une position intermédiaire où il recouvre la deuxième ouverture de soupape (24), mais est soulevé d'un deuxième siège de soupape entourant la deuxième ouverture de soupape (24), au moins un actionneur (25) étant préférentiellement présenté pour déplacer le deuxième élément de fermeture (23) entre la position d'ouverture et la position intermédiaire, lequel est disposé à l'extérieur du carter de soupape et est axialement déplaçable par au moins une tige de soupape (28), avec laquelle le deuxième élément de fermeture (23) se déplace conjointement.

14. Soupape de contrôle de vide selon la revendication 13, **caractérisée en ce qu'**au moins un autre actionneur (26) est présenté, lequel est monté sur une unité de support (27) disposée sur la ou les tiges de soupape (28), et au moyen duquel le deuxième élément de fermeture (23) est déplaçable entre la position intermédiaire et la position de fermeture.

15. Soupape de contrôle de vide selon la revendication 13 ou 14, **caractérisée en ce qu'**une pièce (33) entraînée avec le deuxième élément de fermeture (23) lors du déplacement du deuxième élément de fermeture (23) entre sa position d'ouverture et sa position intermédiaire s'appuie sur la lame de soupape (7) en position de fermeture du deuxième élément de fermeture (23), au niveau de son côté distant de la deuxième ouverture de soupape (24), ladite pièce (33) entraînée avec le deuxième élément de fermeture (23) lors du déplacement du deuxième élément de fermeture (23) entre sa position d'ouverture et sa position intermédiaire s'appuyant en outre, préférentiellement, sur au moins un élément de guidage (16), au niveau de son côté distant de la deuxième ouverture de soupape (24), ledit élément de guidage étant disposé sur la première paroi (1) présentant la première ouverture de soupape (6) ou sur une paroi latérale (3) faisant saillie de la première paroi (1).
